# EUROPEAN PATENT APPLICATION

(11) **EP 3 250 006 A1**
(43) Date of publication of application: **29.11.2017**
(21) Application number: 16740201.5
(22) Date of filing: 20.01.2016
(51) Int. Cl.: H05B 37/02, F21S 6/00, F21V 33/00

(54) **ILLUMINATION DEVICE**

(30) Priority: 20.01.2015 JP 2015008842
(71) Applicant: Balmuda Inc., Musashino-shi, Tokyo 180-0023 (JP)
(72) Inventor: SATO, Tomoki, Musashino-shi Tokyo 180-0023 (JP)
(74) Representative: Isarpatent
(86) International application number: PCT/JP2016/051558
(87) International publication number: WO 2016/117594

(57) **Abstract**

Provided is an illumination device that maintains or improves a user's concentration, by measuring the user's concentration and, when he or she loses concentration, notifying the user of this fact with stimulus or the like. The illumination device includes a light source (62) for lighting up a top of a desk (D), an arm that holds the light source (62) upward of the desk (D), a face camera (21) that detects the eyes of the user (H), an image processing part (120) that calculates the frequency of blinking by the user (H), based on the detection result of the face camera (21), a computation device (130) that counts the frequency of blinking derived by the image processing part (120) and determines whether the frequency of blinking exceeds a predetermined frequency, and a control part (110) that notifies the user (H) through changing of the illuminance of the light source (62) or the like, in the case where the frequency of blinking exceeds the predetermined frequency.

## Description

### Technical Field

The present invention relates to an illumination device, and more particularly to a device that prompts a user to maintain his or her concentration, by issuing a warning when the user's concentration wanes.

### Background Art

Illumination devices that are referred to as so-called desk lights are in general use (e.g., see Patent Literatures 1 to 3). With such illumination devices, a user moves the device as appropriate to adjust its position such that the desired position of the desk is provided with appropriate illuminance.

Various improvements have been made to such desk lights, and an illumination device in which motors are provided in movable portions that are for changing the illumination direction is known (e.g., see Patent Literature 1). Also, an illumination device that adjusts the color and controls the irradiation range to deal with the case where the focus adjustment function of the eyes declines with factors such as age and fatigue is known (e.g., see Patent Literature 2). Furthermore, an illumination device that adjusts the light after determining character size and whether the object being illuminated is color or monochrome is known (e.g., see Patent Literature 3).

### Citation List

### Patent Literature

[PLT 1] JP 04-144002A
[PLT 2] JP 2013-125596A
[PLT 3] JP 2014-086311A

### Summary of Invention

### Technical Problem

The following problems exist with the abovementioned illumination devices. That is, in the case where a user is engaged in a task such as studying or performing an activity using an illumination device for an extended period of time, his or her concentration gradually wanes and efficiency decreases. Even if the light that is irradiated is adjusted, such as changing the illumination direction or changing the color or the irradiation range, this is not associated with the user's concentration, and will not necessarily have the effect of improving his or her concentration.

In view of this, an object of the present invention is to provide an illumination device that is able to maintain or improve a user's concentration, by measuring the user's concentration and, when he or she loses concentration, notifying the user of this fact with stimulus or the like.

### Solution to Problem

In order to resolve the above problems and achieve the object, an illumination device of the present invention is configured as follows.

The illumination device includes a light source for lighting up a desktop, an arm that holds the light source upward of the desk, a face sensor that detects an eye of a user, a computation part that calculates a frequency of blinking by the user, based on a detection result of the face sensor, and determines whether the frequency of blinking exceeds a predetermined frequency, and a control part that notifies the user, in a case where the frequency of blinking exceeds the predetermined frequency.

### Advantageous Effects of Invention

According to the present invention, it becomes possible to maintain or improve a user's concentration, by measuring the user's concentration and, when he or she loses concentration, notifying the user of this fact with stimulus or the like.

### Brief Description of Drawings

FIG. 1 is a perspective view showing an illumination device according to one embodiment of the present invention and a desk on which the illumination device is set.
FIG. 2 is a perspective view showing the illumination device.
FIG. 3 is a bottom view showing a head part incorporated in the illumination device.
FIG. 4 is a schematic block diagram of the illumination device.
FIG. 5 is an explanatory diagram showing the basic operation flow of the illumination device.

### Description of Embodiments

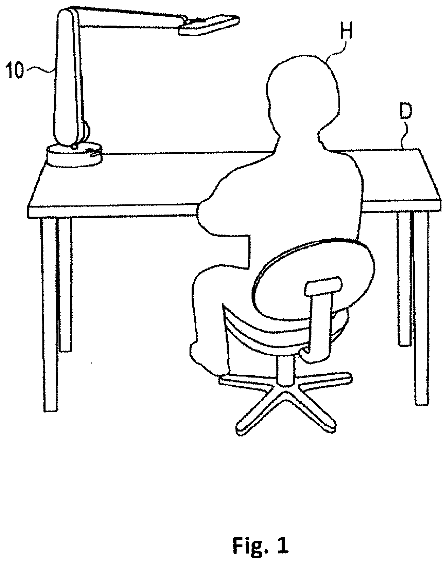

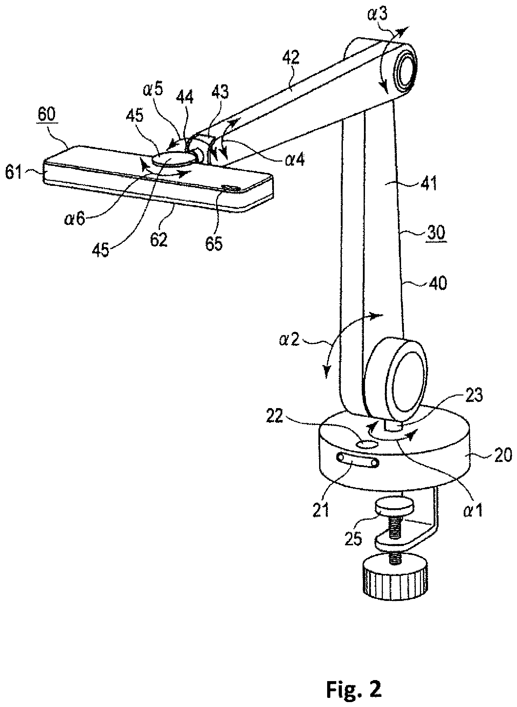

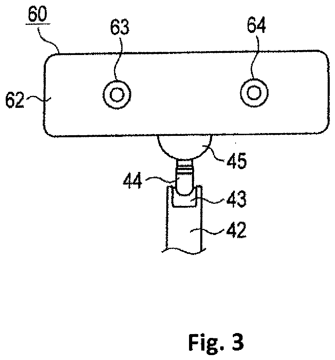

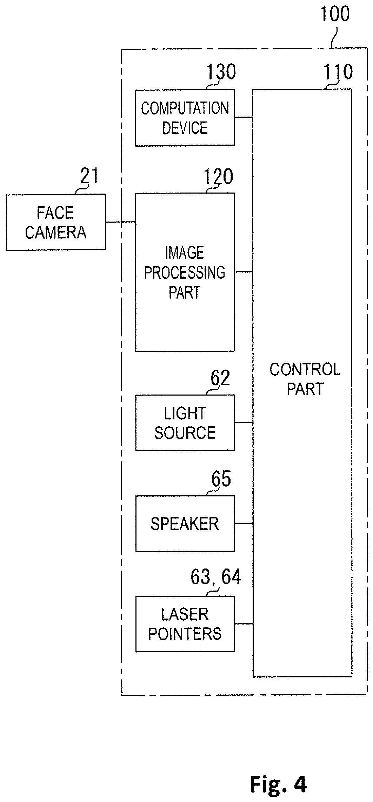

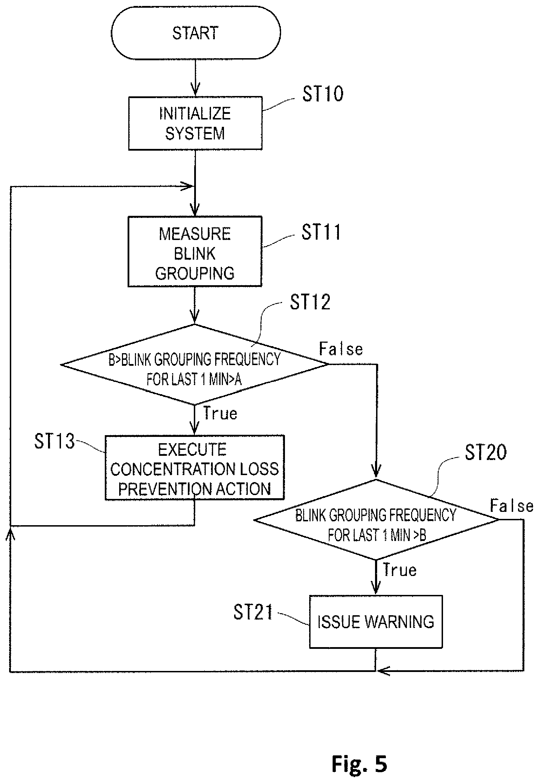

FIG. 1 is a perspective view showing an illumination device 10 according to one embodiment of the present invention and a desk D on which the illumination device 10 is set, FIG. 2 is a perspective view showing the illumination device 10, FIG. 3 is a bottom view showing a head part 60 incorporated in the illumination device 10, FIG. 4 is a schematic block diagram of the illumination device 10, and FIG. 5 is an explanatory diagram showing the operation flow of the illumination device 10.

The illumination device 10 includes a base part 20 that is placed on the desk D, a fixing clamp 25 for fixing this base part 20 to the desk D, an arm mechanism 30 whose base end side is attached to the base part 20 and that determines the position of a light source 62, and the head part 60 that is provided on the tip end side of this arm mechanism 30.

A control device 100 which will be discussed later is provided within the base part 20. A face camera (face sensor) 21 that detects the eyes of a user H and outputs a face image is provided on the near side of the base part 20. Also, a mode switch 22 is provided on an upper surface of the base part 20.

The arm mechanism 30 includes an arm part 40. The arm part 40 includes a first arm 41 that is provided on a rotation shaft 23 built into the base part 20 and pivots in the directions of arrow α1 and the directions of arrow α2 in FIG. 2, a second arm 42 that is provided so as to pivot freely about a horizontal axis on the tip end side of the first arm 41 and pivots in the directions of arrow α3, an elevation angle adjustment member 43 that is provided so as to pivot freely about a horizontal axis on the tip end side of the second arm 42 and pivots in the directions of arrow α4, a swinging member 44 that is provided so as to pivot freely on this elevation angle adjustment member 43 and pivots in the directions of arrow α5, and a head attachment part 45 that is provided so as to pivot freely on this swinging member 44 and pivots in the directions of arrow α6. The head part 60 is attached to the head attachment part 45. It is possible for the user H to change the orientation of each these parts as appropriate.

The head part 60 includes a rectangular head base 61, the light source 62 that is provided on the lower surface of this head base 61 and is for lighting up the top of the desk D, laser pointers 63 and 64 that are provided on the light source 62 side and display a sign (draw a warning mark, etc.) by laser on the desk D, and a speaker 65 that is provided on the upper surface of the head base 61.

The control device 100 includes a control part 110 that cooperatively controls the various parts, an image processing part 120 that is connected to this control part 110, and a computation device 130.

The output of the face camera 21 is connected to the image processing part 120, which processes the face images obtained with the face camera 21, and calculates the eye blink frequency of the user H.

The computation device 130 determines whether the frequency of grouping of eye blinks by the user H exceeds predetermined reference values A and B, based on a predetermined algorithm.

Here, blink grouping will be described. That is, blink frequency is known as a physiological indicator for quantifying arousal level. In particular, it is known that, when the case in which the interval between blinks is one second or less and this occurs successively two or more times is defined as blink grouping, the occurrence frequency of this blink grouping can be used as an evaluation indicator of arousal level ("An approach to the evaluation of arousal level by blinking interval analysis", Japanese Journal of Ergonomics, Vol.19, No.3, pp.161-167, 1983). Accordingly, since arousal level and concentration correspond, the computation device 130 quantifies the concentration of the user H, by sequentially measuring blink grouping and comparing the measurement result with reference values.

The control part 110 is further connected to the light source 62, the laser pointers 63 and 64, and the speaker 65. Specifically, a warning is issued, such as flashing of the light source 62, drawing of a character, sign, mark or the like on the desk D using the laser pointers 63 and 64, or output of a warning sound, announcement or the like from the speaker 65.

The illumination device 10 configured as described above is used as follows. When the illumination device 10 is powered on, the system is initialized (ST10). Next, the frequency of blink grouping is measured (ST11). Next, the frequency of blink grouping for the last one minute is compared with the reference values A and B (ST12).

If, in ST12, the frequency of blink grouping for the last one minute is greater than the reference value A and less than the reference value B, concentration loss prevention action is executed (ST13) and the processing returns to ST11. Here, the concentration loss prevention action involves giving visual stimulus to the user H to restore his or her concentration, by changing the illuminance or the color temperature of the light source 62. Aural stimulus such as environmental noise or the like may also be given.

On the other hand, if, in ST12, the frequency of blink grouping for the last one minute cannot be said to be greater than the reference value A and less than the reference value B, the processing proceeds to ST20, and if the frequency of blink grouping becomes greater than or equal to the reference value B, a warning is issued. That is, a warning is implemented with strong stimulus such as a warning sound from the speaker, blinking of the light or the like (ST21) to forcibly restore the concentration of the user H, and the processing returns to ST11. If the frequency of blink grouping is not greater than or equal to the reference value B at ST20, it is conceivable that the user H is maintaining his or her concentration at a frequency of blink grouping that is less than or equal to the reference value A, and thus the processing returns to ST11 without giving stimulus to the user H.

With the illumination device 10 according to the embodiment as described above, in the case where the frequency of blinking increases and the frequency of blink grouping exceeds the reference value A, the user H is notified that his or her concentration is waning by being given visual or aural stimulus, and in the case where the frequency of blink grouping becomes greater than or equal to the reference value B, the user H is warned that his or her concentration has waned considerably by being given stronger stimulus. The user H will then try to restore his or her concentration by taking a rest or the like.

Note that the present invention is not limited to the above embodiment. For example, although the frequency of blink grouping was measured in the abovementioned example, loss of concentration may be determined directly from the frequency of blinking. Also, although a face camera was given as an example of a face sensor, sensors such as an infrared LED sensor may be used. Also, loss of concentration may be determined from a change in body temperature, a tendency for body movement, a tendency for shifting gaze, or the like. Additionally, various modifications can, of course, be implemented without departing from the gist of the invention.

### List of Reference Numerals

- 10: Illumination device
- 20: Base part
- 21: Face camera
- 30: Arm mechanism
- 40: Arm part
- 60: Head part
- 61: Head base
- 62: Light source
- 63, 64: Laser pointer
- 65: Speaker
- 100: Control device
- 110: Control part
- 120: Image processing part
- 130: Computation device
- H: User
- D: Desk

## Claims

1. An illumination device comprising:
a light source for lighting up a desktop;
an arm that holds the light source upward of the desk;
a face sensor that detects an eye of a user;
a computation part that calculates a frequency of blinking by the user, based on a detection result of the face sensor, and determines whether the frequency of blinking exceeds a predetermined frequency; and
a control part that notifies the user, in a case where the frequency of blinking exceeds the predetermined frequency.

2. The illumination device according to claim 1,
wherein the control part notifies the user through changing of an illuminance or a color temperature of the light source, blinking of the light source, display of a sign, or generation of sound.
